(19) Europäisches Patentamt
European Patent Office
Office européen des brevets

(11) EP 0 650 981 B1

(12) EUROPÄISCHE PATENTSCHRIFT

(45) Veröffentlichungstag und Bekanntmachung des Hinweises auf die Patenterteilung:
**29.01.1997 Patentblatt 1997/05**

(51) Int Cl.[6]: **C08F 10/00**, C08F 4/622

(21) Anmeldenummer: **94116512.8**

(22) Anmeldetag: **20.10.1994**

(54) **Verfahren zur Herstellung von Polymerisaten von C2-bis C10-Alk-1-enen unter Verwendung von racemischen Metallocenkomplexen als Katalysatoren**

Process for the preparation of polymers of C2 to C10 alkenes-1 using racemic complexes of metallocenes as catalyst

Procédé de préparation de polymères de 1-alcènes en C2 à C10 utilisant des complexes racémiques de métallocènes en tant que catalyseurs

(84) Benannte Vertragsstaaten:
**BE DE ES FR GB IT NL**

(30) Priorität: **30.10.1993 DE 4337233**

(43) Veröffentlichungstag der Anmeldung:
**03.05.1995 Patentblatt 1995/18**

(73) Patentinhaber: **BASF Aktiengesellschaft**
**67063 Ludwigshafen (DE)**

(72) Erfinder:
- **Langhauser, Franz, Dr.**
  **D-67098 Bad Dürkheim (DE)**
- **Kerth, Jürgen, Dr.**
  **D-67316 Carlsberg (DE)**
- **Schweier, Günther, Dr.**
  **D-67159 Friedelsheim (DE)**
- **Brintzinger, Hans-Herbert, Prof. Dr.**
  **CH-8274 Taegerswilen (CH)**
- **Mansel, Stefan**
  **D-78462 Konstanz (DE)**
- **Roell, Werner, Dr.**
  **D-78464 Konstanz (DE)**
- **Kirsten, Robin**
  **D-78351 Bodman-Ludwigshafen (DE)**

(56) Entgegenhaltungen:
**WO-A-93/20113**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).



Printed by Jouve, 75001 PARIS (FR)

**Beschreibung**

Die vorliegende Erfindung betrifft Verfahren zur Herstellung von Polymerisaten von $C_2$- bis $C_{10}$-Alk-1-enen bei Drücken von 0,5 bis 3000 bar und Temperaturen von -50 bis 300°C unter Verwendung eines Katalysatorsystems. Weiterhin betrifft die vorliegende Erfindung die Verwendung der nach dem erfindungsgemäßen Verfahren hergestellten Polymerisate von $C_2$- bis $C_{10}$-Alk-1-enen zur Herstellung von Fasern, Folien und Formkörpern sowie die hierbei erhältlichen Fasern, Folien und Formkörper.

Zur stereoselektiven Polymerisation von prochiralen Olefinen mit Metallocen-Katalysatoren ist es notwendig, chirale, stereorigide, d.h. verbrückte Metallocenkomplexe einzusetzen. Bei der Herstellung von isospezifischen, verbrückten Metallocenkomplexen entstehen Gemische der racemischen und meso-Formen, wie in H. Wiesenfeldt, A. Reinmuth, E. Barsties, K. Evertz, H.-H. Brintzinger, J. Organomet. Chem. 369 (1989), 359 - 370 beschrieben. Insbesondere bei der Polymerisation von Propylen bilden lediglich die racemischen Formen effektive Katalysatoren zur Polymerisation, während die meso-Formen vergleichsweise wenig aktiv sind und niedermolekulares, ataktisches Material liefern, weshalb eine Trennung der racemischen und meso-Formen erforderlich ist. Diese Trennung kann durch fraktionierte Kristallisation bzw. Extraktion erfolgen, wie in der EP-A 344 887 beschrieben, oder durch chromatographische Aufarbeitung, beschrieben in F.R.W.P. Wild, L. Zsolnai, G. Huttner, H.H. Brintzinger, J. Organomet. Chem. 232 (1982), 233 - 247 und R.B. Grossman, W.M. Davis, S.L. Buchwald, J. Am. Chem. Soc. 113 (1991), 2321 - 2322. Die Trennung der einzelnen Isomeren ist jedoch mit erheblichem Aufwand verbunden und für technische Anwendungen daher nicht praktikabel.

Aufgabe der vorliegenden Erfindung war es daher, Verfahren zur Herstellung von Polymerisaten von $C_2$- bis $C_{10}$-Alk-1-enen unter Verwendung von Metallocen-Katalysatoren zur Verfügung zu stellen, die verfahrenstechnisch wenig aufwendig sind und die Aufarbeitungsschritte bei der Herstellung der Katalysatoren überflüssig machen.

Die Aufgabe wird erfindungsgemäß dadurch gelöst, daß als Katalysatorsysteme solche verwendet werden, die als aktive Bestandteile

a) Metallocenkomplexe der allgemeinen Formel I

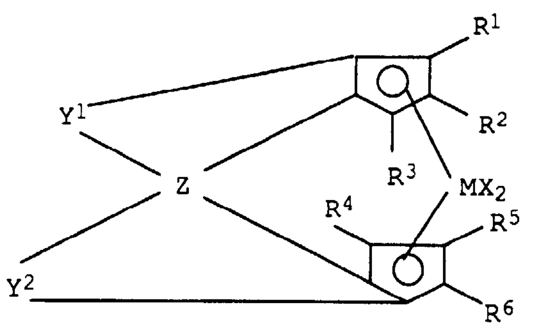

I

in der die Substituenten folgende Bedeutung haben:

| | |
|---|---|
| M | Titan, Zirkonium, Hafnium, Vanadium, Niob oder Tantal, |
| X | Fluor, Chlor, Brom, Iod, Wasserstoff, $C_1$- bis $C_{10}$-Alkyl, $C_6$- bis $C_{15}$-Aryl oder $-OR^7$, |
| wobei $R^7$ | $C_1$- bis $C_{10}$-Alkyl, $C_6$- bis $C_{15}$-Aryl, Alkylaryl, Arylalkyl, Fluoralkyl oder Fluoraryl mit jeweils 1 bis 10 C-Atomen im Alkylrest und 6 bis 20 C-Atomen im Arylrest bedeutet, |
| $R^1$ bis $R^6$ | Wasserstoff, $C_1$ bis $C_{10}$-Alkyl, 5- bis 7-gliedriges Cycloalkyl, das seinerseits $C_1$- bis $C_{10}$-Alkyle als Substituenten tragen kann, $C_6$- bis $C_{15}$-Aryl oder Arylalkyl, wobei gegebenenfalls auch zwei benachbarte Reste gemeinsam für 4 bis 15 C-Atome, bevorzugt 8 bis 15 C-Atome aufweisende cyclische Gruppen stehen können, oder $Si(R^8)_3$ mit |
| $R^8$ | $C_1$- bis $C_{10}$-Alkyl, $C_6$- bis $C_{15}$-Aryl oder $C_3$-bis $C_{10}$-Cycloalkyl, |
| Z | Silicium, Germanium, Zinn oder Kohlenstoff, |

$Y^1$, $Y^2$ 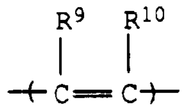 oder 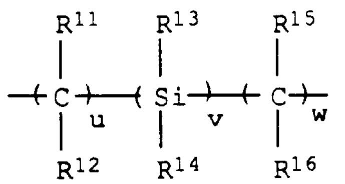 ,

wobei $R^9$ bis $R^{16}$ Wasserstoff, $C_1$ bis $C_{10}$-Alkyl, 5- bis 7-gliedriges Cycloalkyl, das seinerseits $C_1$- bis $C_{10}$-Alkyle als Substituenten tragen kann, $C_6$- bis $C_{15}$-Aryl oder Arylalkyl, wobei gegebenenfalls auch zwei benachbarte Reste gemeinsam für 4 bis 15 C-Atome aufweisende cyclische Gruppen stehen können, oder $Si(R^{17})_3$ bedeuten, mit

$R^{17}$ — $C_1$- bis $C_{10}$-Alkyl, $C_6$- bis $C_{15}$-Aryl oder $C_3$- bis $C_{10}$-Cycloalkyl und

u, v, w — für ganze Zahlen von 0 bis 7 stehen, mit der Maßgabe, daß die Summe u + v + w > 2 ist

sowie

b) eine offenkettige oder cyclische Alumoxanverbindung der allgemeinen Formel VI oder VII

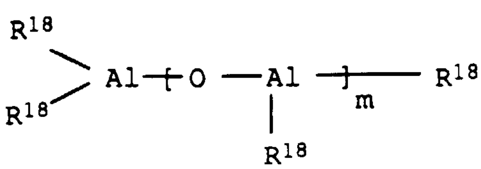

VI

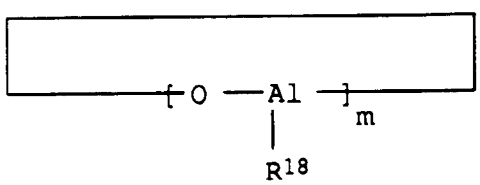

VII

wobei $R^{18}$ eine $C_1$- bis $C_4$-Alkylgruppe bedeutet und m für eine ganze Zahl von 5 bis 30 steht

enthalten.

Außerdem wurde die Verwendung der so hergestellten Polymerisate von $C_2$- bis $C_{10}$-Alk-1-enen zur Herstellung von Fasern, Folien und Formkörpern sowie die hierbei erhältlichen Fasern, Folien und Formkörper gefunden.

Von den Metallocenkomplexen der allgemeinen Formel I sind diejenigen bevorzugt, in denen die Substituenten folgende Bedeutung haben:

M — Zirkonium oder Hafnium

X — Chlor oder $C_1$- bis $C_4$-Alkyl

$R^1$ bis $R^6$ — Wasserstoff, $C_1$ bis $C_{10}$-Alkyl oder Phenyl

Z — Silicium oder Kohlenstoff,

$Y^1$, $Y^2$

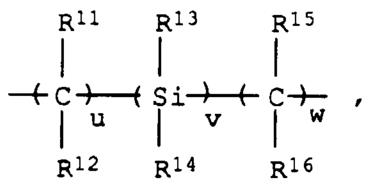

wobei $R^{11}$ bis $R^{16}$Wasserstoff oder $C_1$- bis $C_4$-Alkyl bedeuten.

Besonders bevorzugte Metallocenkomplexe I sind diejenigen, bei denen die beiden substituierten Cyclopentadienylsysteme gleich sind und $Y^1$ und $Y^2$ gleich sind, also symmetrische Verbindungen. Besonders bevorzugte Substituenten $Y^1$ und $Y^2$ sind

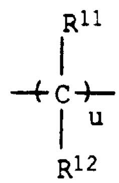

mit $R^{11}$, $R^{12}$ Wasserstoff oder Methyl und u 2 bis 5,

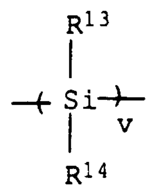

mit $R^{13}$, $R^{14}$ Methyl und v 2 oder 3 Besonders bevorzugt sind:

Bis(spirosilacyclohexan-[b]-tert-butylcyclopentadienyl)zirkondichlorid,
Bis(spirosilacyclohexan-[b]-methylcyclopentadienyl)zirkondichlorid,
Bis(spirosilacyclohexan-[b]-phenylcyclopentadienyl)zirkondichlorid,
Bis(spirosilacyclohexan-[b]-tert-butylcylopentadienyl)hafniumdichlorid,
Bis(spirosilacyclohexan-[b]-methylcyclopentadienyl)hafniumdichlorid,
Bis(spirosilacyclohexan-[b]-phenylcyclopentadienyl)hafniumdichlorid,
Bis(spirosilacyclohexan-[b]-tert-butylcyclopentadienyl)zirkondimethyl,
Bis(spirosilacyclohexan-[b]-methylcyclopentadienyl)zirkondimethyl und
Bis(spirosilacyclohexan-[b]-phenylcyclopentadienyl)zirkondimethyl.

Ein bevorzugtes Verfahren zur Herstellung der Metallocenkomplexe I ist folgendes:

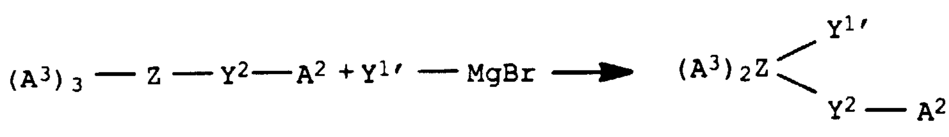

V

| | |
|---|---|
| wobei $A^3$ für | Fluor, Chlor, Brom oder Jod steht, bevorzugt Chlor |
| $A^2$ für | Fluor, Chlor, Brom, Jod oder $-R^{19}OSO_3$, bevorzugt Chlor oder Brom, |
| mit $R^{19}$ | $C_1$- bis $C_{10}$-Alkyl, $C_6$- bis $C_{15}$-Aryl oder $C_3$- bis $C_{10}$-Cycloalkyl |
| und $Y^{1'}$ | $Y^1$ mit einer endständigen Doppelbindung bedeutet. |

Diese Reaktion ist im Prinzip bekannt und beispielsweise in R.E. Scott, K.C. Frisch, J. Am. Chem. Soc. 73 (1951) 2599 - 2600 beschrieben.

Die Umsetzung

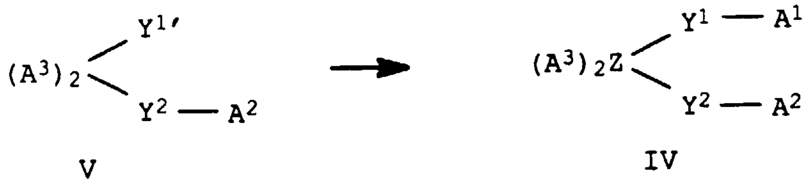

wobei $A^1$ Fluor, Chlor, Brom, Jod oder $-R^{19}OSO_3$ bedeutet, bevorzugt Chlor oder Brom,

mit $R^{19}$ $C_1$- bis $C_{10}$-Alkyl, $C_6$- bis $C_{15}$-Aryl oder $C_3$- bis $C_{10}$-Cycloalkyl,

erfolgt bevorzugt durch Addition von $H-A^1$, insbesondere von H-Br wie prinzipiell in Houben-Weyl Band IV/5a, S. 454 - 456 oder J.E. Francis, L.C. Leitch, Canad. J. Chem. 35 (1957), 500 - 503 beschrieben.

Durch Umsetzung von IV mit

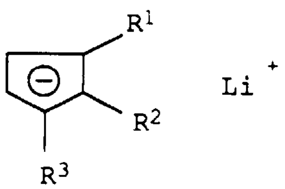

und

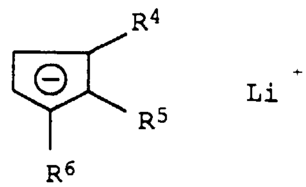

erhält man Cyclopentadienylverbindungen der allgemeinen Formel III

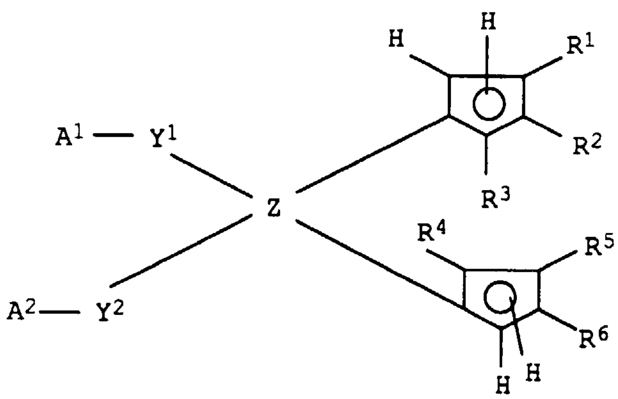

III,

welche man mit metallierenden Agenzien wie Alkali- oder Erdalkalialkyle oder -hydride, bevorzugt n-Butyllithium zu Cyclopentadienylverbindungen der allgemeinen Formel II

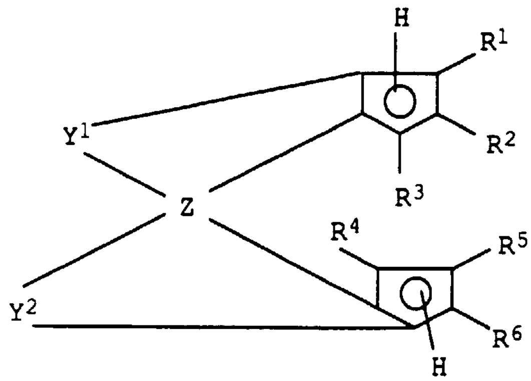

II

umsetzen kann.

Die Cyclopentadienylverbindungen II können durch Umsetzung mit metallierenden Agenzien wie Alkali- oder Erdalkalialkyle oder -hydride, bevorzugt n-Butyllithium und anschließender Versetzung mit $MX_4$ zu den Metallocenkomplexen I reagieren.

Die Reaktionsbedingungen zur Herstellung der Cyclopentadienylverbindungen III sind an sich nicht kritisch. Üblicherweise versetzt man IV mit organischen Lösungsmitteln wie Kohlenwasserstoffen und/oder Ethern, vorzugsweise einer Mischung aus Tetrahydrofuran (THF) und Pentan und kühlt die Mischung auf Temperaturen von -80 bis 0°C. Dann werden die entsprechenden Lithiumcyclopentadienylverbindungen, die vorzugsweise mit einem Lösungsmittel wie THF versetzt sind, hinzugegeben. Nach Erwärmen auf Raumtempertur gibt man zur Aufarbeitung wäßrige Ammoniumsalzlösungen hinzu, vorzugsweise eine gesättigte Ammoniumchloridlösung und trennt die Phasen.

Die Reaktionsbedingungen zur Herstellung der Cyclopentadienylverbindungen II und der Metallocenkomplexe I sind ebenfalls nicht kritisch; man arbeitet bevorzugt analog zu der zur Herstellung der Cyclopentadienylverbindungen III beschriebenen Methode.

Man erhält so die für die Polymerisation von $C_2$- bis $C_{10}$-Alk-1-enen geeigneten Metallocenkomplexe I, die in ihren racemischen Formen Ia und Ib

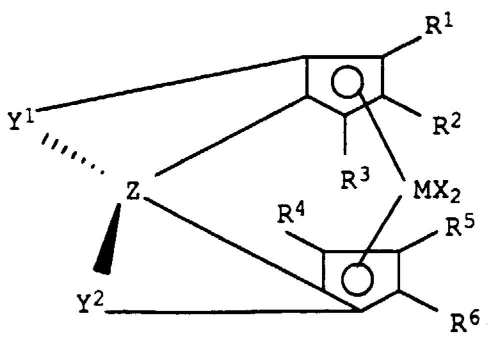

Ia

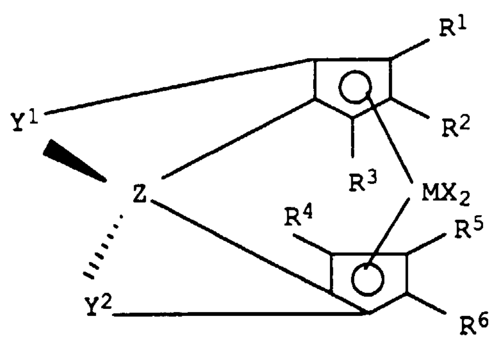

Ib

vorliegen und keine meso-Formen.

Die Metallocenkomplexe können in kationischer Form eingesetzt werden, wie in der EP-A 277 003 und der EP-A 277 004 beschrieben wird.

Neben den Metallocenkomplexen I enthalten die eingesetzten Katalysatorsysteme noch oligomere Aluminiumoxidverbindungen. Geeignet sind beispielsweise offenkettige oder cyclische Alumoxanverbindungen der allgemeinen Formeln VI oder VII

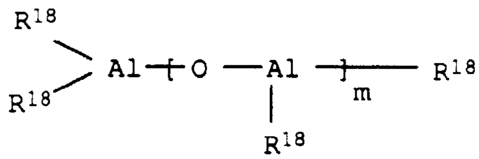

VI

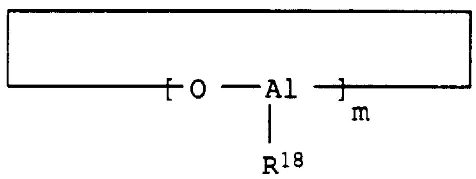

VII

wobei $R^{18}$ eine $C_1$- bis $C_4$-Alkylgruppe, bevorzugt Methyl- oder Ethylgruppe bedeutet und m für eine ganze Zahl von 5 bis 30, bevorzugt 10 bis 25, steht.

Die Herstellung dieser oligomeren Alumoxanverbindungen erfolgt üblicherweise durch Umsetzung einer Lösung von Trialkylaluminium mit Wasser und ist u.a. in der EP-A 284 708 und der US-A 4 794 096 beschrieben.

In der Regel liegen die dabei erhaltenen oligomeren Alumoxanverbindungen als Gemische unterschiedlich langer, sowohl linearer als auch cyclischer Kettenmoleküle vor, so daß m als Mittelwert anzusehen ist. Die Alumoxanverbindungen können auch im Gemisch mit anderen Metallalkylen, bevorzugt mit Aluminiumalkylen, vorliegen.

Es hat sich als vorteilhaft erwiesen, die Komplexverbindung von Metallen der IV. und V. Nebengruppe des Periodensystems und die oligomere Alumoxanverbindung in solchen Mengen zu verwenden, daß das atomare Verhältnis zwischen Aluminium aus der oligomeren Alumoxanverbindung und dem Übergangsmetall aus der Komplexverbindung von Metallen der IV. und V. Nebengruppe des Periodensystems im Bereich von 10:1 bis $10^6$:1, insbesondere im Bereich von 10:1 bis $10^4$:1, liegt.

Als Lösungsmittel für diese Katalysatorsysteme werden übliche aromatische Kohlenwasserstoffe eingesetzt, bevorzugt mit 6 bis 20 C-Atomen, insbesondere Xylole und Toluol sowie deren Mischungen.

Bei der Herstellung der Polymerisate von $C_2$- bis $C_{10}$-Alk-1-enen kann auch ein geträgertes Katalysatorsystem eingesetzt werden. Geeignete Trägermaterialien sind beispielsweise Kieselgele, bevorzugt solche der Formel $SiO_2 \cdot a\,Al_2O_3$, worin a für eine Zahl im Bereich von 0 bis 2 steht, vorzugsweise 0 bis 0,5; dies sind also Alumosilikate oder Siliciumdioxid. Vorzugsweise weisen die Träger einen Teilchendurchmesser im Bereich von 1 bis 200 µm auf, insbesondere von 30 bis 80 µm. Derartige Produkte sind im Handel erhältlich, z.B. Silica Gel 332 der Fa. Grace.

Unter Polymerisaten von $C_2$- bis $C_{10}$-Alk-1-enen sind Homo- oder Copolymerisate von $C_2$- bis $C_{10}$-Alk-1-enen, insbesondere von $C_2$- bis $C_6$-Alk-1-enen zu verstehen. Bevorzugt sind Homopolymerisate des Ethylens oder des Propylens und Copolymerisate von Ethylen und Propylen, Ethylen und But-1-en, Ethylen und Pent-1-en, Ethylen und Hex-1-en sowie Propylen und But-1-en, Propylen und Pent-1-en wie auch Propylen und Hex-1-en. Der Anteil an Comonomeren kann dabei bis zu 50 Gew.-%, insbesondere bis zu 30 Gew.-% betragen.

Das erfindungsgemäße Verfahren kann sowohl in Lösung, in einer Suspension, in der Gasphase oder aber als Substanzpolymerisation durchgeführt werden. Bevorzugt wird das Verfahren zur Herstellung der Polymerisate von $C_2$-$C_{10}$-Alk-1-enen in der Gasphase durchgeführt. Die Polymerisationsbedingungen sind an sich unkritisch; Drücke von 0,5 bis 3000 bar, bevorzugt von 1 bis 80 bar und Temperaturen von -50 bis +300°C, bevorzugt von 0 bis 150°C haben sich als geeignet erwiesen. Die Polymerisation kann in Anwesenheit von üblichen Reglern, beispielsweise Wasserstoff oder $C_2$-$C_8$-Alk-1-enen und in üblichen Polymerisationsreaktoren durchgeführt werden.

Bei einem bevorzugten Verfahren zur Herstellung von Homopolymerisaten von $C_2$- bis $C_{10}$-Alk-1-enen geht man so vor, daß die aktiven Bestandteile des Katalysatorsystems in Toluol bei Temperaturen im Bereich von 0 bis 140°C vorgelegt werden.

Hierzu wird dann über einen Zeitraum von 0,5 bis 12 Stunden das $C_2$- bis $C_{10}$-Alk-1-en bei einem Druck von 1 bis 60 bar aufgepreßt. Die Aufarbeitung der Polymerisate erfolgt dann nach üblichen Methoden.

Das erfindungsgemäße Verfahren zur Herstellung von Polymerisaten von $C_2$- bis $C_{10}$-Alk-1-enen zeichnet sich durch geringen verfahrenstechnischen Aufwand aus.

Die nach dem erfindungsgemäßen Verfahren hergestellten Polymerisate von $C_2$- bis $C_{10}$-Alk-1-enen weisen ein ausgewogenes Eigenschaftsprofil auf und eignen sich insbesondere zur Herstellung von Fasern, Folien und Formkörpern. Die nach dem erfindungsgemäßen Verfahren hergestellten Polymerisate von $C_3$- bis $C_{10}$-Alk-1-enen weisen eine

1.3-Fehlinsertionsrate (WO 92/5204) von 0,1 bis 100, vorzugsweise 1 bis 50, insbesondere 2 bis 30 pro 1000 Monomereinheiten auf, wobei unter Monomeren bei Copolymerisaten die Gesamtmenge an Monomeren zu verstehen ist.

Beispiele

Beispiel 1: Herstellung von Homopolypropylen

Zu einer Lösung von 0,44 g (≙ 7,6 mmol) Methylalumoxan in Toluol (1,53 molar, Fa. Witco) wurden bei einer Temperatur von 50°C 3,2 mg (≙ 6,25 µmol) Bis(spirosilacyclohexan-[b]-tert.butylcyclopentadienyl)zirkondichlorid gegeben und 30 Minuten gerührt. Anschließend wurde über einen Zeitraum von 4 Stunden bei einem Druck von 2 bar Propylen aufgepreßt, diese Mischung dann in ein Gemisch aus 700 ml Methanol und 30 ml HCl (konz.) gegossen, der Niederschlag abfiltriert und mit 50 ml Methanol gewaschen. Nach dem Trocknen über einen Zeitraum von 6 Stunden bei 10 mbar und 80°C erhielt man 48,7 g Homopolypropylen mit einem Schmelzpunkt von 128,8°C, einem Gewichtsmittelwert $\overline{M}_w$ von 9800, einem Zahlenmittelwert $\overline{M}_n$ von 5600, womit $\overline{M}_w/\overline{M}_n$ = 1,75, einer intrinsischen Viskosität η von 0,16 dl/g.

Der Schmelzpunkt wurde mittels einer DSC-Messung (10°C/1 min Aufheizrate) bestimmt. Die Bestimmung des Gewichtsmittelwertes $\overline{M}_w$ und des Zahlenmittelwertes $\overline{M}_n$ erfolgte durch Gelpermeationschromatographie. Die intrinsische Viskosität η wurde an einer 0,1 gew.-%igen Lösung in Dekalin bei 135°C bestimmt.

Die Produktivität des Katalysatorsystems betrug 974 g/mol Zr · bar · h.

Die Pentaden wurden mittels NMR-Analyse ermittelt:

| | | | | | |
|---|---|---|---|---|---|
| mm | 97.8 | mr | 1.8 | rr | 0.4 |
| mmmm | 88.2 | mmrr | 0.3 | rrrr | 0.1 |
| mmmr | 9.1 | rmrr + mmrm | 1.3 | mrrr | 0.3 |
| rmmr | 0.5 | rmrm | 0.2 | mrrm | 0.0 |

## Patentansprüche

1. Verfahren zur Herstellung von Polymerisaten von $C_2$- bis $C_{10}$-Alk-1-enen bei Drücken von 0,5 bis 3000 bar und Temperaturen von -50 bis 300°C unter Verwendung eines Katalysatorsystems, dadurch gekennzeichnet, daß als Katalysatorsysteme solche verwendet werden, die als aktive Bestandteile

   a) Metallocenkomplexe der allgemeinen Formel I

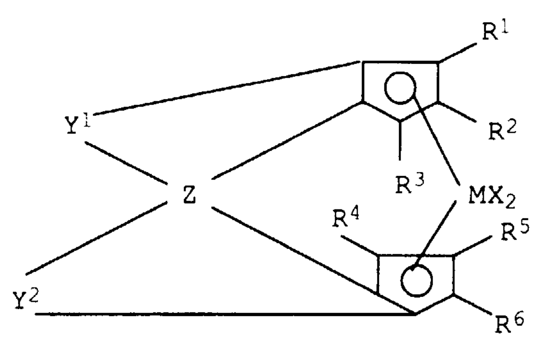

I

in der die Substituenten folgende Bedeutung haben:

| | |
|---|---|
| M | Titan, Zirkonium, Hafnium, Vanadium, Niob oder Tantal, |
| X | Fluor, Chlor, Brom, Iod, Wasserstoff, $C_1$- bis $C_{10}$-Alkyl, $C_6$- bis $C_{15}$-Aryl oder $-OR^7$, |
| wobei $R^7$ | $C_1$- bis $C_{10}$-Alkyl, $C_6$- bis $C_{15}$-Aryl, Alkylaryl, Arylalkyl, Fluoralkyl oder Fluoraryl mit jeweils 1 bis 10 C-Atomen im Alkylrest und 6 bis 20 C-Atomen im Arylrest bedeutet, |

| | |
|---|---|
| $R^1$ bis $R^6$ | Wasserstoff, $C_1$ bis $C_{10}$-Alkyl, 5- bis 7-gliedriges Cycloalkyl, das seinerseits $C_1$- bis $C_{10}$-Alkyle als Substituenten tragen kann, $C_6$- bis $C_{15}$-Aryl oder Arylalkyl, wobei gegebenenfalls auch zwei benachbarte Reste gemeinsam für 4 bis 15 C-Atome aufweisende cyclische Gruppen stehen können, oder $Si(R^8)_3$ mit |
| $R^8$ | $C_1$- bis $C_{10}$-Alkyl, $C_6$- bis $C_{15}$-Aryl oder $C_3$- bis $C_{10}$-Cycloalkyl, |
| Z | Silicium, Germanium, Zinn oder Kohlenstoff, |
| $Y^1$, $Y^2$ | 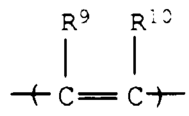 oder 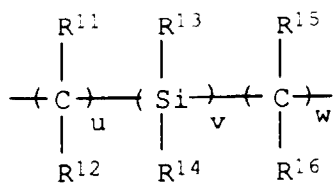 , |
| wobei $R^9$ bis $R^{16}$ | Wasserstoff, $C_1$ bis $C_{10}$-Alkyl, 5- bis 7-gliedriges Cycloalkyl, das seinerseits $C_1$- bis $C_{10}$-Alkyle als Substituenten tragen kann, $C_6$- bis $C_{15}$-Aryl oder Arylalkyl, wobei gegebenenfalls auch zwei benachbarte Reste gemeinsam für 4 bis 15 C-Atome aufweisende cyclische Gruppen stehen können, oder $Si(R^{17})_3$ bedeuten, mit |
| $R^{17}$ | $C_1$- bis $C_{10}$-Alkyl, $C_6$- bis $C_{15}$-Aryl oder $C_3$- bis $C_{10}$-Cycloalkyl und |
| u, v, w | für ganze Zahlen von 0 bis 7 stehen, mit der Maßgabe, daß die Summe $u + v + w \geq 2$ ist |

sowie

b) eine offenkettige oder cyclische Alumoxanverbindung der allgemeinen Formel VI oder VII

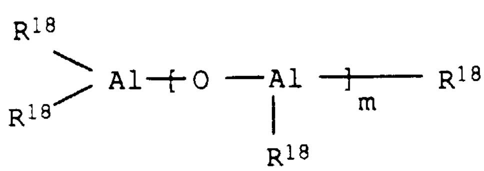

VI

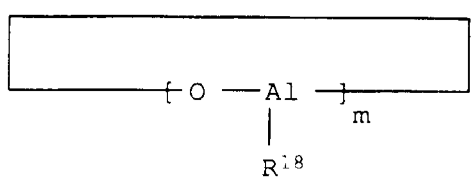

VII

wobei $R^{18}$ eine $C_1$- bis $C_4$-Alkylgruppe bedeutet und m für eine ganze Zahl von 5 bis 30 steht

enthalten.

## Claims

**1.** A process for the preparation of polymers of $C_2$-$C_{10}$-alk-1-enes at from 0.5 to 3000 bar and from -50 to 300°C using a catalyst system, wherein the catalyst system used is one which contains, as active components,

a) a metallocene complex of the formula I

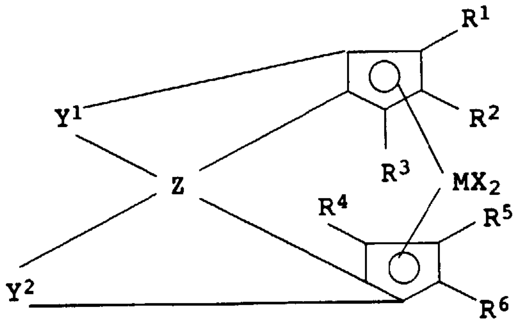

I

where

| | |
|---|---|
| M | is titanium, zirconium, hafnium, vanadium, niobium or tantalum, |
| X | is fluorine, chlorine, bromine, iodine, hydrogen, $C_1$-$C_{10}$-alkyl, $C_6$-$C_{15}$-aryl or $-OR^7$, |
| $R^7$ | is $C_1$-$C_{10}$-alkyl, $C_6$-$C_{15}$-aryl, alkylaryl, arylalkyl, fluoroalkyl or fluoraryl, where each alkyl radical is of 1 to 10 carbon atoms and each aryl radical is of 6 to 20 carbon atoms, |
| $R^1$ to $R^6$ | are each hydrogen, $C_1$-$C_{10}$-alkyl, 5-membered to 7-membered cycloalkyl, which in turn may carry $C_1$-$C_{10}$-alkyl radicals as substituents, $C_6$-$C_{15}$-aryl or arylalkyl, where two adjacent radicals together may furthermore be a cyclic group of 4 to 15 carbon atoms, or $Si(R^8)_3$, |
| $R^8$ | is $C_1$-$C_{10}$-alkyl, $C_6$-$C_{15}$-aryl or $C_3$-$C_{10}$-cycloalkyl, |
| Z | is silicon, germanium, tin or carbon, |
| $Y^1$, $Y^2$ | are each |

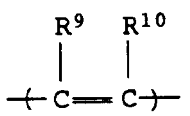

or

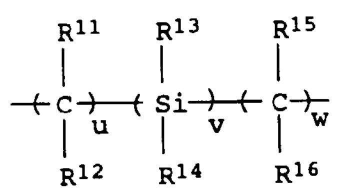

,

| | |
|---|---|
| $R^9$ to $R^{16}$ | are each hydrogen, $C_1$-$C_{10}$-alkyl, 5-membered to 7-membered cycloalkyl, which in turn may carry $C_1$-$C_{10}$-alkyl radicals as substituents, $C_6$-$C_{15}$-aryl or arylalkyl, where two adjacent radicals together may furthermore be a cyclic group of 4 to 15 carbon atoms, or $Si(R^{17})_3$, |
| $R^{17}$ | is $C_1$-$C_{10}$-alkyl, $C_6$-$C_{15}$-aryl or $C_3$-$C_{10}$-cycloalkyl and |
| u, v, w | are each an integer from 0 to 7, with the proviso that the sum is $u + v + w \geq 2$, |

and

b) an open-chain or cyclic alumoxane compound of the formula VI or VII

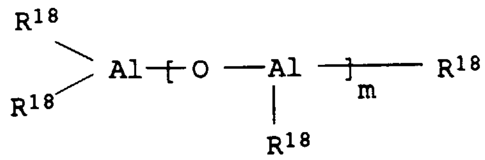

VI

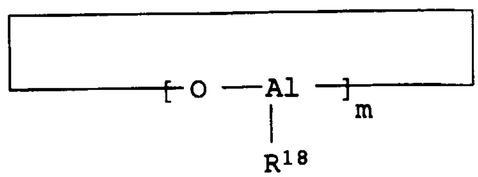

VII

where $R^{18}$ is $C_1$-$C_4$-alkyl and m is an integer from 5 to 30.

## Revendications

1. Procédé de préparation de polymères de 1-alcènes en $C_2$ à $C_{10}$ à des pressions de 0,5 à 3.000 bar et des températures de - 50 à 300 °C en utilisant un système de catalyseur, caractérisé en ce qu'on utilise en tant que systèmes de catalyseur, des systèmes qui contiennent en tant que constituants actifs

   a) des complexes de métallocènes répondant à la formule générale I

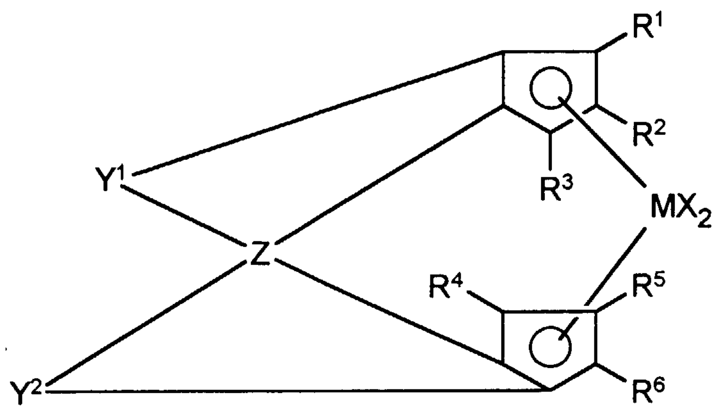

I

dans laquelle les substituants présentent la signification suivante :

| | |
|---|---|
| M | représente du titane, du zirconium, de l'hafnium, du vanadium, du niobium ou du tantale, |
| X | représente un atome de fluor, un atome de chlore, un atome de brome, un atome d'iode, un atome d'hydrogène, un groupe alkyle en $C_1$ à $C_{10}$, un groupe aryle en $C_6$ à $C_{15}$ ou un groupe $-OR^7$, |
| où $R^7$ | représente un groupe alkyle en $C_1$ à $C_{10}$, un groupe aryle en $C_6$ à $C_{15}$, un groupe alkylaryle, un groupe arylalkyle, un groupe fluoroalkyle ou un groupe fluoroaryle avec respectivement 1 à 10 atomes de carbone dans le résidu alkyle et 6 à 20 atomes de carbone dans le résidu aryle, |
| $R^1$ à $R^6$ | représentent un atome d'hydrogène, un groupe alkyle en $C_1$ à $C_{10}$, un groupe cycloalkyle à 5 à 7 membres, qui peut lui-même porter des groupes alkyles en $C_1$ à $C_{10}$ à titre de substituants, un groupe aryle en $C_6$ à $C_{15}$, ou un groupe arylalkyle, deux résidus adjacents pouvant aussi éventuellement représenter ensemble des groupes cycliques présentant 4 à 15 atomes de carbone, ou un groupe $Si(R^8)_3$ avec |
| $R^8$ | représente un groupe alkyle en $C_1$ à $C_{10}$, un groupe aryle en $C_6$ à $C_{15}$, ou un groupe cycloalkyle en $C_3$ à $C_{10}$, |

Z représente du silicium, du germanium, de l'étain ou du carbone,

$Y^1$, $Y^2$ représentent

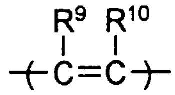 ou 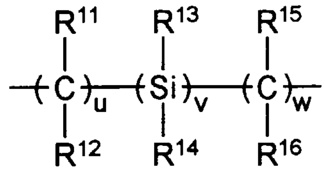 ,

où $R^9$ à $R^{16}$ représentent un atome d'hydrogène, un groupe alkyle en $C_1$ à $C_{10}$, un groupe cycloalkyle à 5 à 7 membres, qui peut lui-même porter des groupes alkyles en $C_1$ à $C_{10}$ à titre de substituants, un groupe aryle en $C_6$ à $C_{15}$, ou un groupe arylalkyle, deux résidus adjacents pouvant aussi éventuellement représenter ensemble des groupes cycliques présentant 4 à 15 atomes de carbone, ou un groupe $Si(R^{17})_3$ avec

$R^{17}$ représente un groupe alkyle en $C_1$ à $C_{10}$, un groupe aryle en $C_6$ à $C_{15}$, ou un groupe cycloalkyle en $C_3$ à $C_{10}$,

et

u, v, w représentent des nombres entiers de 0 à 7, sous réserve que la somme $u + v + w \geq 2$

de même que

b) un composé alumoxane à chaîne ouverte ou cyclique répondant à la formule générale VI ou VII

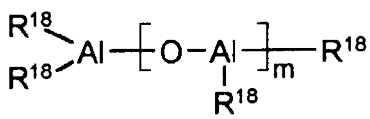

VI

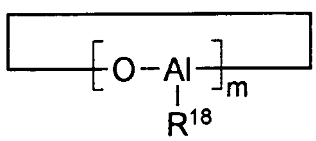

VII

où $R^{18}$ représente un groupe alkyle en $C_1$ à $C_4$ et m représente un nombre entier de 5 à 30.